**Europäisches Patentamt**

**European Patent Office**

**Office européen des brevets**

(11) Veröffentlichungsnummer : **0 335 147 B1**

(12) **EUROPÄISCHE PATENTSCHRIFT**

(45) Veröffentlichungstag der Patentschrift :
03.06.92 Patentblatt 92/23

(51) Int. Cl.⁵ : **C01G 15/00, C22B 58/00**

(21) Anmeldenummer : **89104161.8**

(22) Anmeldetag : **09.03.89**

(54) **Verfahren und Vorrichtung zur Gewinnung von Galliumchlorid aus galliumhaltigen Verbindungen.**

(30) Priorität : **26.03.88 DE 3810480**

(43) Veröffentlichungstag der Anmeldung :
**04.10.89 Patentblatt 89/40**

(45) Bekanntmachung des Hinweises auf die
Patenterteilung :
**03.06.92 Patentblatt 92/23**

(84) Benannte Vertragsstaaten :
**BE CH DE FR GB LI NL**

(56) Entgegenhaltungen :
**EP-A- 0 219 213**
**EP-A- 0 271 845**
**DE-B- 1 187 377**
**US-A- 2 928 731**
**US-A- 3 075 901**

(73) Patentinhaber : **HOECHST
AKTIENGESELLSCHAFT
Postfach 80 03 20
W-6230 Frankfurt am Main 80 (DE)**

(72) Erfinder : **Keller, Rolf, Dr.
Vaalserstrasse 2-4
W-5100 Aachen (DE)**

EP 0 335 147 B1

## Beschreibung

Die vorliegende Erfindung betrifft ein Verfahren zur Gewinnung von Galliumchlorid aus Verbindungen dieses Metalls oder aus Material, das diese Verbindungen enthält, speziell aus galliumhaltigen Abfällen der Halbleiterindustrie (z.B. GaP, GaAs, GaAlAs, GaInAsP), durch Umsetzung mit Chlor und Destillation des erhaltenen Umsetzungsproduktes sowie eine Vorrichtung zur Durchführung dieses Verfahrens.

Gallium wird vor allem für die Herstellung von Verbindungen mit Elementen der fünften Hauptgruppe des Periodensystems (GaP, GaAs, GaAlAs, GaInAsP) in der Halbleitertechnik benötigt. Verbindungen von Gallium mit Nickel, Zirkonium ($ZrGa_3$), Vanadium ($V_3Ga$) und Niob ($Nb_3Ga$) zeigen supraleitende Eigenschaften, während die Spinelle des Galliums mit Lithium, Magnesium, Eisen oder den seltenen Erden als Magnetblasenspeicher oder Lasermaterial Anwendung finden.

Für eine Reihe von Anwendungen in der Halbleiterindustrie werden an die Reinheit der Metalle zur Herstellung der entsprechenden Metallverbindungen besonders hohe Anforderungen gestellt. Dabei sind Reinheitsgrade von größer als 99,9999 % durchaus üblich.

Dies setzt voraus, daß man zur Herstellung solch reiner Metalle auf Ausgangsprodukte zurückgreifen kann, die schon von sich aus über einen hohen Reinheitsgrad verfügen.

Aufgrund des stark ansteigenden Bedarfs an solch hochreinem Metall müssen außerdem neue Quellen zur Deckung der Nachfrage erschlossen werden. Neben der Erschließung neuer natürlicher Rohstoffquellen gewinnt die Aufarbeitung von Abfällen, die bei der Halbleiterherstellung anfallen und die Galliumverbindungen enthalten, immer mehr an Bedeutung, da dort bis zu 90 % des in der Produktion eingesetzten Materials als Abfall anfallen können. Dabei kann galliumhaltiger Schrott eine sehr heterogene Zusammensetzung haben, z.B. stückige Abfälle, Rückstände aus den Tiegeln, polykristallines Pulver, das beim Schneiden und Polieren der Wafer entsteht und mit Schmier- und Schleifmitteln verunreinigt ist oder Halbleiter-Platten, die nach den physikalischen Messungen mit Loten oder Kontakten, beispielsweise aus Gold oder Germanium, verunreinigt sind. Deshalb ist die Aufarbeitung mit einem einfachen, für alle Abfallsorten leicht durchzuführenden Verfahren von großem wirtschaftlichen Interesse.

Von den verschiedenen bekannten Methoden zur Aufarbeitung von Abfällen aus der Halbleiterproduktion ist die Chlorierung und die Trennung der dabei erhaltenen Chloride von besonderer Bedeutung.

So wird nach dem Verfahren gemäß der EP-OS 219 213 stückiger Abfall, der aus einer Gallium-Arsen-Verbindung besteht und der sich auf einem Rost in einem Kolben befindet, mit einem Chlorgasstrom behandelt. Das rohe Chlorierungsprodukt wird dann, nachdem es in einen zweiten Kolben, der mit einem Heizmantel versehen ist, umgefüllt wurde, einer Destillation unterworfen, wobei zunächst das entstandene Arsenchlorid und diejenigen Stoffe, welche einen niedrigeren Siedepunkt als Arsenchlorid aufweisen, aus dem Umsetzungsprodukt entfernt werden. Anschließend wird die bei Temperaturen oberhalb 180°C übergehende und aus Galliumchlorid bestehende Fraktion getrennt aufgefangen.

Diese Arbeitsweise und die bislang verwendete Vorrichtung weisen jedoch die Nachteile auf, daß durch das erforderliche Umfüllen in die Destillationsapparatur ein zusätzlicher sicherheitstechnisch aufwendiger Verfahrensschritt benötigt wird. Außerdem wird durch das bloße Anblasen der Abfälle mit Chlorgas eine weitaus schlechtere Umsatzrate erreicht als bei Durchführung des erfindungsgemäßen Verfahrens in der entsprechenden Vorrichtung.

Überraschenderweise wurde nun gefunden, daß man diese Nachteile vermeiden kann, wenn man galliumhaltige Verbindungen in einem Gefäß, das von außen mit einem Wärmeaustauschmittel auf Temperaturen von 80 bis 210°C, vorzugsweise 85 bis 205°C, gehalten wird, mit Chlor umsetzt, wobei das Chlor von oben in das Gefäß eingeleitet wird und man das entsprechende flüssige Chlorierungsprodukt durch einen durchlässigen Boden, über den das Gefäß mit einem Behälter verbunden ist, in diesen Behälter hinunterfließen läßt, worauf das im Behälter gesammelte Chlorierungsprodukt direkt unter Abtrennung der Galliumchloridfraktion rektifiziert wird.

Zur Durchführung dieses Verfahrens ist im besonderen Maße eine Vorrichtung geeignet, die aus einem Behälter besteht, auf dem

a) eine Füllkörperkolonne mit einem Destillationsaufsatz und

b) mindestens ein Doppelmantelgefäß angebracht ist, das oben mit einer Zuleitung für Chlorgas, außen mit Zu- und Abflußleitungen für ein im Mantel befindliches Wärmeaustauschmittel und unten mit einer für flüssiges Galliumchlorid durchlässigen Bodenplatte versehen ist, wobei diese durchlässige Bodenplatte die Verbindung der Innenräume des Doppelmantelgefäßes und des Behälters darstellt.

Vorteilhafte Ausgestaltungen dieser erfindungsgemäßen Vorrichtung bestehen beispielsweise darin, daß der Behälter ein Glaskolben ist; daß das Doppelmantelgefäß ein Doppelmantelquarzrohr ist, sowie daß die Bodenplatte des Doppelmantelgefäßes eine grobe Glasfilterfritte ist.

Es hat sich gezeigt, daß erfindungsgemäß sowohl das aus Sicherheitsgründen sehr bedenkliche Umfüllen der arsenchloridhaltigen Reaktionsprodukte entfällt, als auch eine höhere Umsatzrate und eine bessere Kontrolle der stark exothermen Reaktion möglich ist.

Dadurch, daß das Chlorgas durch die ganze Länge des Rohres strömen muß, wird eine größere Kontaktoberfläche erzeugt als bei dem bloßen oberflächlichen Anblasen der Abfälle, was zu einer Vergrößerung der Umsatzrate führt.

Das durch Destillation gereinigte Galliumchlorid fällt in sehr reiner Form an. So ist es mit dem erfindungsgemäßen Verfahren möglich, den Arsengehalt im Galliumchlorid so weit herabzusetzen, daß bei einer sich in bekannter weise anschließenden elektrolytischen Gewinnung des Galliummetalls der Elektrolyt aufgrund seines sehr niedrigen Arsengehaltes keiner weiteren Entsorgung mehr bedarf. Nach der EP-OS 219 213 dagegen ist der Arsengehalt im Galliumchlorid mit ca. 1,6 % so hoch, daß der daraus hergestellte Elektrolyt nach der Elektrolyse einer zusätzlichen Arsenentsorgung unterworfen werden muß.

Das erfindungsgemäße Verfahren zeichnet sich also durch sicherheits- und anwendungstechnische Vorteile gegenüber dem bekannten Verfahren aus.

Außerdem eignen sich auch die anfallenden Halogenide der V. Hauptgruppe aufgrund ihrer Reinheit direkt als Ausgangsstoffe für zahlreiche Anwendungen, z.B. beim CVD-Verfahren (Chemical Vapour Deposition) oder zur Darstellung der hochreinen Elemente.

Beispiel 1

2 kg stückiger GaAs-Abfall wurde in ein Doppelmantelquarzrohr gegeben, welches mit seinem unteren Ende über eine Glasfilterfritte mit einem darunter befindlichen Kolben verbunden war, der mit einer Füllkörperkolonne mit Destillieraufsatz bestückt war. Dann wurde 8 1/2 h lang von oben ein Chlorgasstrom mit einer Durchflußrate von 120 l/h hindurchgeleitet und, mit Hilfe eines Silikonöls als Wärmeaustauschmittel, das Quarzrohr auf Temperaturen von 85 bis 205°C gehalten. Die entstandenen Trichloride tropften dabei direkt in den Kolben und wurden anschließend destillativ getrennt, indem man sie über die Füllkörperkolonne fraktioerte. Es wurden so 2106,7 g $AsCl_3$ (84 % d. Th.) und 1455,8 g $GaCl_3$ (59,8 % d. Th.) erhalten. Zwischen der Abnahme von $AsCl_3$ und $GaCl_3$ wurde ein Zwischenlauf von 484,1 g genommen, welcher zusammen mit dem im Kolben befindlichen Sumpf (508,9 g) in einem nächsten Ansatz wiederverwendet wurde. Der Arsengehalt im $GaCl_3$ betrug 6 ppm, alle übrigen Verunreinigungen waren < 1 ppm.

Beispiel 2

1,8 kg stückiger GaAs-Schrott wurde zusammen mit 0,2 kg metallischen Arsenstücken in das Quarzrohr gefüllt. Im Kolben wurden außerdem 0,5 kg $AsCl_3$ und 0,5 kg Arsenpulver vorgelegt. Es wurde 8 1/2 h lang ein Chlorgasstrom mit einer Durchflußrate von 135 l/h hindurchgeleitet und analog Beispiel 1 verfahren. Nach der Destillation wurden 3444,1 g $AsCl_3$ (87,2 % d. Th.) und 1391,4 g $GaCl_3$ (63,5 % d. Th.) erhalten. An Vor- und Zwischenlauf bei der Destillation wurden insgesamt 812,6 g abgenommen, die zusammen mit dem Sumpf (307 g) in einem nächsten Ansatz als Vorlage verwendet wurden. Der Arsengehalt im destillierten $GaCl_3$ betrug 5 ppm, alle übrigen Verunreinigungen waren < 1 ppm.

**Patentansprüche**

1. Verfahren zur Gewinnung von Galliumchlorid aus galliumhaltigen Verbindungen, durch deren Umsetzung mit Chlor und Destillation des erhaltenen Umsetzungsproduktes, dadurch gekennzeichnet, daß man diese Verbindungen in einem Gefäß, das von außen mit einem Wärmeaustauschmittel auf Temperaturen von 80 bis 210°C gehalten wird, mit dem Chlor umsetzt, wobei das Chlor von oben in das Gefäß eingeleitet wird und man das entstehende flüssige Chlorierungsprodukt durch einen durchlässigen Boden, über den das Gefäß mit einem Behälter verbunden ist, in diesen Behälter hinunterfließen läßt, worauf das im Behälter gesammelte Chlorierungsprodukt direkt unter Abtrennung der Galliumchloridfraktion rektifiziert wird.

2. Vorrichtung zur Gewinnung von Galliumchlorid aus galliumhaltigen Verbindungen nach Anspruch 1, gekennzeichnet durch einen Behälter, auf dem

a) eine Füllkörperkolonne mit einem Destillationsaufsatz und

b) mindestens ein Doppelmantelgefäß angebracht ist, das oben mit einer Zuleitung für Chlorgas, außen mit Zu- und Abflußleitungen für ein im Mantel befindliches Wärmeaustauschmittel und unten mit einer, für flüssiges Galliumchlorid durchlässigen Bodenplatte versehen ist, wobei diese durchlässige Bodenplatte die Verbindung der Innenräume des Doppelmantelgefäßes und des Behälters darstellt.

3. Vorrichtung nach Anspruch 2, dadurch gekennzeichnet, daß der Behälter ein Glaskolben ist.

4. Vorrichtung nach Anspruch 2 oder 3, <u>dadurch gekennzeichnet</u>, daß das Doppelmantelgefäß ein Doppelmantelquarzrohr ist.

5. Vorrichtung nach mindestens einem der Ansprüche 2 bis 4, <u>dadurch gekennzeichnet</u>, daß die Bodenplatte des Doppelmantelgefäßes eine grobe Glasfilterfritte ist.

## Claims

1. A process for the recovery of gallium chloride from gallium-containing compounds by reacting them with chlorine and distillation of the resulting reaction product, which comprises reacting these compounds with chlorine in a vessel which is maintained from the outside at temperatures of 80 to 210°C by means of the heat transfer medium, in which process the chlorine is introduced into the vessel from above and the resulting liquid chlorination product is allowed to flow through a permeable bottom, through which the vessel is connected with a container, into this container, followed by rectification of the chlorination product collected in the container directly with removal of the gallium chloride fraction.

2. A means for the recovery of gallium chloride from gallium-containing compounds as claimed in claim 1, which comprises a container on which are arranged
   a) a packed column with a distillation head and
   b) at least a jacketed vessel which is equipped at the top with an inlet for chlorine gas, on the outside with inlets and outlets for a heat transfer medium present in the jacket and at the bottom with a bottom plate permeable for liquid gallium chloride, this permeable bottom plate representing the connection of the inside spaces of the jacketed vessel with the container.

3. The means as claimed in claim 2, wherein the container is a glass flask.

4. The means as claimed in claim 2 or 3, wherein the jacketed vessel is a jacketed quartz tube.

5. The means as claimed in at least one of claims 2 to 4, wherein the bottom plate of the jacketed vessel is a coarse sintered glass frit.

## Revendications

1. Procédé d'extraction de chlorure de gallium à partir de composés contenant du gallium, par réaction entre ces derniers et le chlore et distillation du produit de réaction obtenu, caractérisé en ce qu'on fait réagir ces composés avec le chlore dans un vase maintenu de l'extérieur par un caloporteur à des températures comprises entre 80 et 210°C, le chlore étant introduit par le haut dans le vase, et qu'on laisse s'écouler le produit de chloration liquide formé à travers une plaque de fond perméable assurant la communication entre le vase et un récipient, dans ce récipient, le produit de chloration recueilli dans le récipient étant rectifié directement par séparation de la fraction de chlorure de gallium.

2. Dispositif d'extraction de chlorure de gallium à partir de composés contenant du gallium selon la revendication 1, caractérisé par un récipient sur lequel sont déposés :
   a) une colonne à garnissage surmontée d'un tube de distillation, et
   b) au moins un vase à double enveloppe muni à sa partie supérieure d'un tube d'amenée du chlore gazeux, à l'extérieur de tubes d'admission et d'évacuation d'un caloporteur se trouvant dans l'enveloppe et, à sa partie inférieure, d'une plaque de fond perméable au chlorure de gallium liquide, cette plaque de fond perméable assurant la communication entre l'intérieur du vase à double enveloppe et le récipient.

3. Dispositif selon la revendication 2, caractérisé en ce que le récipient est un ballon en verre.

4. Dispositif selon la revendication 2 ou 3, caractérisé en ce que le vase à double enveloppe est un tube en quartz à double enveloppe.

5. Dispositif selon au moins une des revendications 2 à 4, caractérisé en ce que la plaque de fond du vase à double enveloppe est une fritte grossière de filtre de verre.